# EUROPÄISCHE PATENTSCHRIFT

(11) **EP 2 222 985 B1**
(45) Veröffentlichungstag und Bekanntmachung des Hinweises auf die Patenterteilung: **21.12.2011**
(21) Anmeldenummer: 08849512.2
(22) Anmeldetag: 28.10.2008
(51) Int. Cl.: F16H 63/38, F16H 61/24

(54) **RASTIERSEGMENT FÜR EIN ÜBERTRAGUNGSELEMENT IN EINER SCHALTVORRICHTUNG SOWIE SCHALTVORRICHTUNG MIT DEM RASTIERSEGMENT**
LOCKING SEGMENT FOR A TRANSMISSION ELEMENT IN A SWITCHING DEVICE AND SWITCHING DEVICE HAVING THE LOCKING SEGMENT
SEGMENT DE CRANTAGE POUR UN ÉLÉMENT DE TRANSMISSION DANS UN DISPOSITIF DE CHANGEMENT DE VITESSE, ET DISPOSITIF DE CHANGEMENT DE VITESSE POURVU DU SEGMENT DE CRANTAGE

(30) Priorität: 15.11.2007 DE 102007054548
(43) Veröffentlichungstag der Anmeldung: 01.09.2010
(73) Patentinhaber: Schaeffler Technologies GmbH & Co. KG, 91074 Herzogenaurach (DE)
(72) Erfinder: KRÄMER, Klaus, 91460 Baudenbach (DE); LÖFFELMANN, Jochen, 96158 Frensdorf (DE)
(86) Internationale Anmeldenummer: PCT/EP2008/064582
(87) Internationale Veröffentlichungsnummer: WO 2009/062843

(56) Entgegenhaltungen:
- EP-A- 0 999 384
- DE-A1-102004 036 369
- DE-C1- 4 427 076
- DE-U1- 29 923 146

## Beschreibung

### Gebiet der Erfindung

Die Erfindung betrifft eine Getriebeschaltvorrichtung mit einem Rastiersegment eines Übertragungselements, insbesondere einer Schaltwelle, wobei das Übertragungselement zur Umsetzung von Schalt- und/oder Wählbewegungen in Bezug auf eine Längsachse in axialer Richtung verschiebbar und/oder in Umlaufrichtung schwenkbar in einem Gehäuse, insbesondere in einem Schaltdom, angeordnet und/oder anordbar ist, mit einer Funktionskontur, welche Führungsgassen zur Führung eines gehäuseseitigen Arretierungselements in radialer Orientierung und/oder radiales Richtung in Bezug auf die Längsachse aufweist und mit mindestens einem Anschlagsbereich für einen gehäuseseitigen Anschlagkörper sowie eine Schaltvorrichtung mit diesem Rastiersegment.

Schaltwellen in Getriebevorrichtungen z. B. bei Kraftfahrzeugen bilden ein Zwischenglied bei der Übertragung von Schalt- bzw. Wählbewegungen von einem Fahrer zu einem Getriebe. Üblicherweise werden die Schalt- bzw. Wählbewegungen über eine Verschiebung der Schaltwelle in axialer Richtung bzw. einer Verschwenkung der Schaltwelle um deren Längsachse übertragen. Um eine Führung bei den Wähl- bzw. Schaltbewegungen zu gewährleisten, weisen die Schaltwellen oftmals eine Kulissenführung auf, welche in der Funktion einer Zwangsführung nur bestimmte Schalt- bzw. Wählbewegungen erlaubt. Für ein Einrasten in der gewählten Schaltposition haben die Schaltwellen üblicherweise einen Rastierbereich, auf dem ein Rastierelement während der Schalt- bzw. Wählbewegungen entlang fährt und der Vertiefungen aufweist, in die das Rastierelement in den Endpositionen der geschalteten Gänge zur Stabilisierung des eingelegten Ganges eintaucht bzw. einrastet.

Die Schaltwellen sind üblicherweise so ausgeführt, dass eine Fehlschaltung oder ein Überschalten, also eine zu weite axiale Verschiebung bzw. Verschwenkung in Umlaufrichtung, mechanisch verhindert ist. Insbesondere weisen Schaltvorrichtungen mit Schaltwellen oft einen mechanischen Endanschlag auf, so dass die Schaltwelle nach Erreichen der Schaltstellung in Schaltrichtung nicht weiter verschwenkt oder verschoben werden kann.

Beispielsweise offenbart die Druckschrift DE 41 105 55 A1 eine Schaltvorrichtung für ein Geschwindigkeits-Wechselgetriebe mit einer Schaltwelle, die nutförmige Vertiefungen aufweist, welche als Schaltkulisse mit entsprechend dem Schaltbild ausgerichteten Nutwänden bzw. Nutflanken dargestellt sind. In diese Vertiefungen greift ein in einem Gehäuse federnd abgestütztes Rastelement bei der Gangvorwahl und der Gangschaltung ein. Ein Überschalten bzw. Überdrehen der Schaltwelle über die Schaltposition hinaus wird durch Anschläge verhindert, welche an gehäusefesten Einrichtungen im Getriebe oder im Getriebegehäuse vorgesehen sind.

Die Druckschrift DE 198 059 24 A1 beschreibt ein Getriebe mit einer Zentralschaltwelle, auf die ein Topf aufgesetzt ist, in dessen Wandung zum einen eine Rastierung eingeformt ist, welche mit einer gehäusefest gelagerten Kugelraste zusammenwirkt und zum anderen eine Kulisse eingebracht ist, welche zur Begrenzung des Schaltwegs der Zentralschaltwelle dient.

Die Druckschrift EP 1 126 198 B1, die wohl den nächstkommenden Stand der Technik bildet, betrifft eine Schaltvorrichtung eines Wechselgetriebes mit Schaltwegbegrenzung. Die Schaltvorrichtung umfasst eine Schaltwelle, auf bzw. an der eine Kulisse zur Zwangsführung der Wähl- bzw. Schaltbewegung der Schaltwelle und eine Rastkontur angeordnet ist, die von einer Kugelraste abgefahren wird. Die Konturlinien der Rastkontur sind so gestaltet, dass in dem Endbereich eines Schaltwegs eine Rampenkontur mit einer sehr steilen Krümmung eingebracht ist, die zu einer derartigen Erhöhung des Kraftaufwands zum Bewegen der Schaltwelle führt, dass die Rampenkontur einem weichen, mechanischen Anschlag gleichkommt. Dabei ist die Rampenkontur so abgestimmt, dass die Schaltwelle in sehr gedämpfter Form auf einen zusätzlichen mechanischen Anschlag auftrifft oder, dass aufgrund der entstehenden Kräfte ein zusätzlicher mechanischer Anschlag nicht unbedingt notwendig ist.

Die DE 29 923 146 U1 offenbart eine Getriebeschaltvorrichtung mit den Merkmalen des Oberbegriffs des Anspruchs 1.

### Beschreibung

Der Erfindung liegt die Aufgabe zugrunde, eine Schaltvorrichtung mit einem Rastiersegment für ein Übertragungselement zu schaffen, so dass eine toleranzarme Realisierung der Schalt- bzw. Wählwegbegrenzung umgesetzt ist.

Diese Aufgabe wird mit einer Getriebeschaltvorrichtung mit den Merkmalen des Anspruchs 1 gelöst. Bevorzugte oder vorteilhafte Ausführungsformen der Erfindung ergeben sich aus den Unteransprüchen, der nachfolgenden Beschreibung und den beigefügten Figuren.

Das Übertragungselement ist zur Umsetzung bzw. Übertragung von Schalt- und/oder Wählbewegungen ausgebildet, wobei es hierfür in Bezug auf eine eigene Längsachse in axialer Richtung verschiebbar und/oder in Bezug auf die Längsachse in Umlaufrichtung schwenkbar in einem Gehäuse, insbesondere in einem Schaltdom, angeordnet und/oder anordbar ist. Insbesondere dient das Übertragungselement zur Übertragung der Schalt- bzw. Wählbewegungen von einem Fahrer zu einem Wechselgetriebe, bevorzugt Mehrganggetriebe eines Kraftfahrzeugs.

Das Rastiersegment weist eine Funktionskontur auf, welche Führungsgassen zur Führung eines gehäuseseitigen, vorzugsweise in dem und/oder über das Gehäuse gelagerten Arretierelements bereitstellt, wobei das Arretierelement durch Abfahren der Führungsgassen in radialer Orientierung und/oder in radialer Richtung in Bezug auf die Längsachse des Übertragungselements geführt wird. Die Führungsgassen bilden somit für das Arretierelement beim Abfahren eine Höhenkontur, wobei die Höhe zum einen zu einem gewünschten Wähl- bzw. Schaltwiderstand beim Betätigen führt und zum anderen - insbesondere in einer Schaltstellung - zu einer Arretierung des Arretierungselements in einem vertieften Bereich führt.

Für eine Wegbegrenzung bei den Schalt- bzw. Wählbewegungen und/oder um ein Überschalten oder ein Überdrücken des Übertragungselements zu vermeiden, weist das Rastiersegment mindestens einen Anschlagsbereich, insbesondere Endanschlagsbereich, für einen gehäuseseitigen Anschlagkörper auf. Insbesondere ist der Anschlagsbereich und die Funktionskontur auf einem einstückigen und/oder einmaterialigen Bereich des Rastiersegments angeordnet.

Der Anschlagsbereich ist außerhalb der Führungsgassen angeordnet und/oder der Anschlagsbereich ist für einen stoßartigen, insbesondere einen harten Anschlag des Anschlagkörpers ausgebildet und/oder angeordnet.

Eine Überlegung der Erfindung ist es, dass die aus dem Stand der Technik bekannten Lösungen die Funktionen "Rastierung" und "Endanschlag" räumlich trennen und insbesondere auf zwei verschiedenen Bauteilen umsetzen, wobei die Toleranzen hinsichtlich des Endanschlags von Schalt- bzw. Wählbewegungen abhängig von der toleranzarmen Positionierung der zwei Bauteile bzw. der in die Bauteile eingreifenden Funktionselemente ist. Bei einer Integration der Funktion "Endanschlag" in die Rastierkontur mittels eines progressiven Anstiegs der Konturlinie am Ende der Führungsgasse wird nur ein "weicher" Anschlag umgesetzt, der ebenfalls keine toleranzarme Endlage des Schaltwegs definiert.

Demgegenüber wird durch die Erfindung vorgeschlagen, die Rastierkontur und einen harten Endanschlag zusammen in dem Rastiersegment zu integrieren. Auf diese Weise werden die Toleranzen bei den Schalt- bzw. Wählbewegungen drastisch verringert, weil die Funktionskontur, die die Schaltstellung beeinflusst, und der Endanschlag auf einem einzigen Bauteil realisiert sind, welches in einfacher Weise toleranzarm gefertigt werden kann.

Bei einer bevorzugten Ausführungsform der Erfindung ist das Rastiersegment als ein Blechformteil ausgebildet, dessen Formgebung über einen insbesondere kalten Umformprozess erfolgt ist. Auf diese Weise ist das Rastiersegment kostengünstig in großer Anzahl bei gleichzeitig geringen Fertigungstoleranzen herstellbar. Das Rastiersegment wird bevorzugt stoffschlüssig, z.B. durch Schweißen, auf dem Übertragungselement oder auf einem zwischen Übertragungselement und Rastiersegment angeordnetem Adapterteil, insbesondere einer Schalthülse, befestigt.

Die Führungsgassen sind der Funktionskontur sind als Wähl- und Schaltgassen ausgebildet. Vorzugsweise ist die Wählgasse zentral auf dem Übertragungselement und/oder in Längsrichtung des Übertragungselements ausgerichtet angeordnet. Die Schaltgassen erstrecken sich vorzugsweise beidseitig zu der Wählgasse in Umlaufrichtung und/oder -Orientierung und/oder fischgrätenartig. Die Führungsgassen sind bevorzugt als Höhenkonturlinien in radialer Richtung ausgebildet und definieren den Wähl- bzw. Schaltwiderstand sowie die Rast- und/oder Schaltpositionen.

Bei einer bevorzugten konstruktiven Realisierung sind der oder die Anschlagsbereiche in einer gedachten Verlängerung der Führungsgasse bzw. -gassen angeordnet, so dass die Anschlagsbereiche mechanische oder harte Endanschläge bilden, welche ein Überschalten der Gänge verhindern. Derartige Anschlagsbereiche können an mindestens einer Führungsgasse, bevorzugt einigen Führungsgassen und insbesondere allen Führungsgassen angeordnet sein.

Bei einer bevorzugten konstruktiven Ausprägung der Erfindung sind die Anschlagsbereiche oder eine Teilmenge davon auf einer von dem Rastiersegment auskragenden, insbesondere in radialer Orientierung auskragenden Blechlasche angeordnet. Die Blechlasche erstreckt sich bevorzugt in einer Ebene senkrecht oder abschnittsweise senkrecht zu der Längserstreckung der Führungsgassen

Bei einer bevorzugten Weiterbildung der Erfindung sind beidseitig zu der Wählgasse und vorzugsweise parallel zu der Wählgasse ausgerichtet jeweils eine derartige Blechlasche angeordnet, wobei bevorzugt auf jeder Blechlasche mehrere Anschlagsbereiche positioniert sind. Damit ergibt sich das Rastiersegment in einem Querschnitt in einer Radialebene zur Längsachse als ein annähernd W-förmiges Bauteil, wobei die freien Schenkel des "Ws" als Blechlaschen in radialer Richtung abstehen.

Bei einer optionalen Verbesserung sind zwischen den Anschlagsbereichen auf der Blechlasche Versteifungsausformungen ausgebildet, um eine hohe mechanische Stabilität bei gleichzeitig geringer Blechdicke der Blechlasche zu erreichen. Die Versteifungsausformungen verlaufen bevorzugt entlang der genannten Radialebene zu der Längsachse.

Bei einer möglichen Weiterbildung der Erfindung sind die Anschlagsbereiche so angeordnet, dass bei unterschiedlichen Schaltstellungen unterschiedliche Schwenkwinkel des Übertragungselements um dessen Längsachse in einer Umfangsrichtung ermöglicht sind. Anders ausgedrückt erlaubt ein erster Anschlagsbereich einer Blechlasche einen ersten Schwenkwinkel und ein zweiter Anschlagsbereich der gleichen Blechlasche einen zweiten Schwenkwinkel, der unterschiedlich zu dem ersten Schwenkwinkel ausgebildet ist.

Das Übertragungselement ist insbesondere als eine Schaltwelle ausgebildet. Die Schaltvorrichtung weist ein Arretierelement auf, welches gehäuseseitig so angeordnet ist, dass dieses auf einer Funktionskontur des Rastiersegments in radialer Orientierung und/oder in radialer Richtung in Bezug auf die Längsachse des Übertragungselements geführt ist und wobei das Rastiersegment mindestens einen Anschlagsbereich für einen gehäuseseitigen Anschlagkörper bildet.

Bei einer bevorzugten Realisierung der Erfindung kann das Arretierelement als ein in radialer Richtung und/oder in radialer Orientierung im oder über das Gehäuse verschiebbar gelagerter Arretierbolzen verkörpert sein, wobei der Arretierbolzen einen Bolzenhals und einen Rollkörper umfasst und wobei der Rollkörper in dem Bolzenhals insbesondere drehbar gelagert ist. Bevorzugt ist der Rollkörper als eine Rollkugel ausgebildet.

Der gehäuseseitige Anschlagkörper kann als der Bolzenhals oder ein mit dem Bolzenhals mitgeführtes Bauelement oder -abschnitt realisiert sein. Optional ist der Bolzenhals mit Verstärkungen und/oder Versteifungen versehen, um die durch die Endanschlagsfunktion erhöhten Belastungen zu kompensieren.

Bei einer anderen Ausführungsalternative ist der gehäuseseitige Anschlagkörper starr mittelbar und/oder unmittelbar mit dem Gehäuse verbunden und ist als eine gehäusefeste Hülse ausgebildet, welche das Arretierelement, insbesondere den Arretierbolzen, umschließt. Diese Ausführungsform des Anschlagkörpers ist gegenüber den Endanschlagsbelastungen aufgrund der rohrförmigen Ausprägung und der gehäusefesten Aufnahme mechanisch sehr steif ausgebildet. Bei Weiterbildungen der Erfindung kann der Anschlagkörper und/oder die Hülse Aussparungen zur Gewichtserleichterung bzw. Materialersparnis aufweisen.

Bei einer bevorzugten Umsetzung der Erfindung weist die Schaltvorrichtung eine Schaltkulisse und einen Kulissenfinger auf, welcher in der Schaltkulisse zwangsgeführt wird, wobei die Schaltkulisse drehfest auf dem Übertragungselement und der Kulissenfinger gehäusefest angeordnet ist oder vice versa und wobei Schaltkulisse und Kulissenfinger so ausgebildet sind, dass der Kulissenfinger in Schaltrichtung endanschlagsfrei in der Schaltkulisse geführt ist. Die Funktionen des Endanschlags übernimmt - wie bereits erläutert - der Anschlagsbereich des Rastiersegments. Beispielsweise ist die Schaltkulisse so ausgeführt, dass der Schaltweg in der Kulisse in Schaltrichtung verlängert ist.

Weitere Merkmale, Vorteile und Wirkungen der Erfindung ergeben sich aus der nachfolgenden Beschreibung eines Ausführungsbeispiels der Erfindung sowie der beigefügten Figuren. Dabei zeigen:
- Figur 1: eine dreidimensionale Darstellung einer Draufsicht auf eine Schaltwelle mit einem Rastiersegment als ein Ausführungsbeispiel der Erfindung;
- Figur 2: in einer dreidimensionalen, schematischen Darstellung in Draufsicht, das Rastiersegment in Figur 1 in Vergrößerung;
- Figur 3: eine schematisierte Schnittdarstellung der Schaltwelle in Figur 3 in einer Radialebene im Bereich des Rastiersegments;
- Figur 4: eine schematische dreidimensionale Darstellung der Schaltwelle in Figur 1 aus einer weiteren Perspektive.

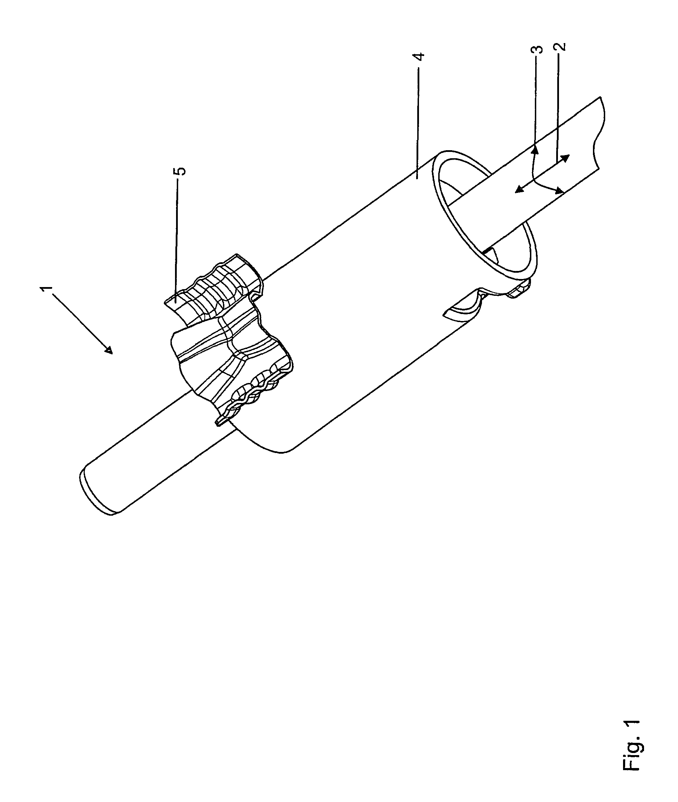

Die Figur 1 zeigt in einer schematischen dreidimensionalen Darstellung einen Abschnitt einer Schaltwelle 1, welche zur Übertragung von Schalt- bzw. Wählbewegungen an ein Getriebe ausgebildet ist. Hierfür kann die Schaltwelle 1 gemäß Pfeil 2 entlang ihrer Längsachse axial verschoben und gemäß Pfeil 3 um ihre Längsachse verschwenkt werden. Bei diesem Ausführungsbeispiel werden durch eine axiale Verschiebung entlang des Pfeils 2 Wählbewegungen und mit einer Verschwenkung in Umlaufrichtung gemäß Pfeil 3 Schaltbewegungen an das Getriebe übertragen.

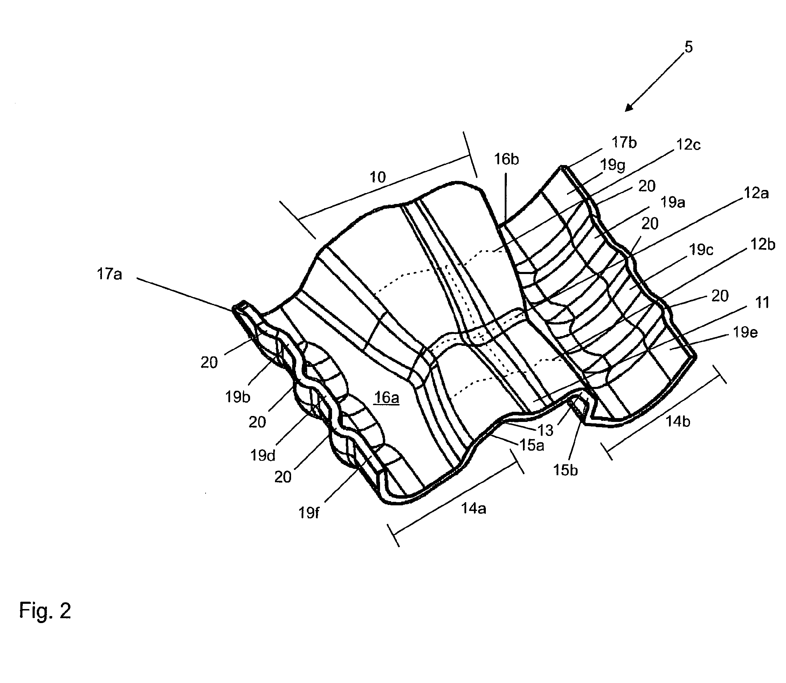

Auf dem in der Figur 1 dargestellten Bereich der Schaltwelle 1 ist eine Hülse 4 koaxial zu der Schaltwelle 1 angeordnet und mit dieser - gegebenenfalls unter Verwendung von Zwischenelementen - stoffschlüssig und somit drehfest verbunden. Auf der Hülse 4 ist ein Rastiersegment 5 in Form eines Blechformteils ebenfalls stoffschlüssig befestigt, so dass das Rastiersegment 5 bei der axialen Verschiebung bzw. der Verschwenkung von der Schaltwelle 1 mitgeführt wird. Eine vergrößerte Darstellung des Rastiersegments 5 ist durch die Figur 2 gegeben.

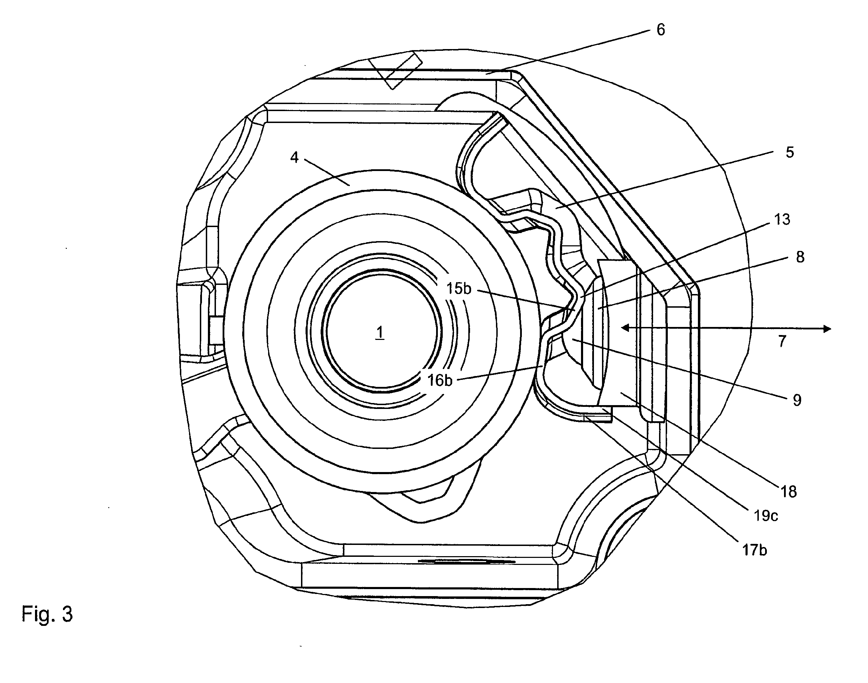

Die Figur 3 zeigt einen Querschnitt durch einen Schaltdom 6 einer Schaltvorrichtung in einer Radialebene zu der Längsachse der Schaltwelle 1 im Bereich des Rastiersegments 5. In dieser Darstellung ist die Funktion des Rastiersegments 5 zu erkennen, die darin besteht, einen in radialer Richtung gemäß Pfeil 7 verschiebbar in dem Schaltdom 6 gelagerten und radial nach innen vorgespannten Arretierbolzen 8 in radialer Richtung zu führen. Der Arretierbolzen 8 weist eine Rollkugel 9 auf, die in dem Arretierbolzen 8 drehbar gelagert ist, so dass der Arretierbolzen 8 bei einer Verschwenkung oder axialen Verschiebung der Schaltwelle 1 über das Rastiersegment 5 abrollt. Durch die Höhenkonturierung des Rastiersegments 5 und die Vorspannung des Arretierbolzens 8 werden bei einer Relativbewegung Rampen abgefahren, so dass bestimmte Wähl- bzw. Schaltbewegungen mit einer Wähl- bzw. Schaltkraft beaufschlagt werden. In einer Schaltstellung - wie sie beispielsweise in der Figur 3 gezeigt ist - rastet der Arretierbolzen 8 in einer Vertiefung des Rastiersegments 5 ein und sichert durch die Verrastung einen gewählten Gang.

Wie sich insbesondere aus der Figur 2 ergibt, weist das Rastiersegment 5 einen in Längserstreckung der Schaltwelle 1 ausgerichteten, plateauähnlichen Mittelabschnitt 10 auf, welcher eine in das Rastiersegment 5 eingeformte Wählgasse 11 trägt. Senkrecht oder im Wesentlichen senkrecht zu der Wählgasse 11 ist eine erste Schaltgasse 12a eingeformt, welche in diesem Ausführungsbeispiel den Gängen 3 und 4 des Getriebes zugeordnet ist. Ausgehend von der Schaltgasse 12a verläuft die Wählgasse 11 in der Figur 2 zu dem Betrachter hin in etwa parallel zu der Schaltwelle 1, wobei - in der Figur 2 gestrichelt angedeutet - eine weitere Schaltgasse 12 b, die den Gängen 5 und 6 zugeordnet ist, gebildet ist. In der Gegenrichtung steigt die Wählgasse 11 an, so dass ein Fahrer eine gewisse Wählkraft aufweisen muss und kreuzt im ansteigenden Bereich eine weitere Schaltgasse 12 c, die in der Figur 2 ebenfalls gestrichelt dargestellt und den Gängen 1 und 2 zugeordnet ist. Die Wählgasse 11 und die Schaltgassen 12 a bis c stellen somit Führungsgassen für die Rollkugel 9 in radialer Richtung in Bezug auf die Längsachse der Schaltwelle 1 dar.

An dem Ende jeder Schaltgasse 12 a bis c knickt der Mittelabschnitt 10 in radialer Richtung ab, so dass die Rollkugel 9 - wie es auch in der Figur 3 gezeigt ist - in Umlaufrichtung hinter dem Knick 13 einrasten kann.

Beidseitig schließt sich an dem Mittelabschnitt 10 nach dem Knick 13 jeweils ein im Querschnitt in der Radialebene zu der Schaltwelle 1 U-förmiger Abschnitt 14 a, b an, wobei der jeweils innere Schenkel 15 a, b einen Anlagebereich für die Rollkugel 9 in der Arretierstellung bildet. Der Grund 16 a, b des U-förmigen Abschnitts 14 a, b wird im Betrieb von der Rollkugel 9 nicht berührt. An den Grund 16 a, b schließen sich Blechlaschen 17 a, b an, die jeweils den zweiten, freien Schenkel des U-förmigen Abschnitts 14 a, b bilden. Die Blechlaschen 17 a, b sind so dimensioniert, dass diese eine Endanschlagfunktion bei Erreichen des Endes eines Schaltweges umsetzen.

Wie sich insbesondere aus der Figur 3 ergibt, ist der Arretierbolzen 8 mit einer Hülse 18 koaxial umgeben, die gehäusefest bzw. starr mit dem Schaltdom 6 verbunden ist. Die Hülse 18 und die Blechlaschen 17 a, b sind so ausgebildet und/oder angeordnet, dass bei Erreichen einer Schaltstellung die Hülse 18 mit einem Stoß oder harten Anschlag an die Blechlasche 17a bzw. 17b fährt. Hierfür weisen die Blechlaschen 17 a, 17 b Endanschlagsbereiche 19 a bis 19 g auf, welche als Endanschläge für die Gänge 1 bis 6 bzw. den Rückwärtsgang ausgebildet sind. Die Endanschlagsbereiche 19 a bis g sind dabei jeweils als sich in axialer Richtung gerade erstreckende Bereiche realisiert, welche voneinander durch Versteifungseinformungen 20 getrennt sind. Die Versteifungseinformungen 20 dienen dazu, die mechanische Stabilität der Blechlaschen 17 a, b zu verbessern.

Die Endanschlagsbereiche 19 a bis g können in Umlaufrichtung unterschiedlich weit abgeprägt sein, so dass verschiedene Winkel in den einzelnen Schalt- bzw. Führungsgassen 12 bis c zugelassen werden. Der Vorteil des Rastiersegments 5 liegt vor allem darin, dass dieses sowohl Führungsfunktion als auch Endanschlagsfunktion übernimmt, so dass Führungspositionen und Endanschlagspositionen sehr genau zueinander toleriert sind, da deren Referenzflächen auf einem gemeinsamen Bauteil angebracht sind.

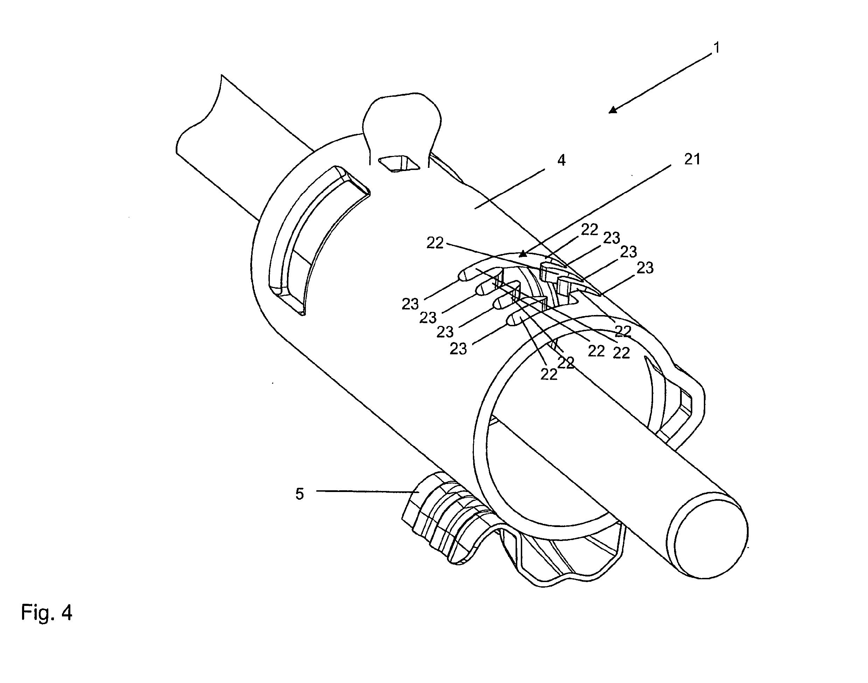

Die Figur 4 zeigt die Schaltwelle 1 in der Figur 1 in einer gedrehten Lage, jedoch in gleicher Darstellung, wobei an der Unterseite der Hülse 4 das Rastiersegment 5 und an der Oberseite eine Kulissenführung 21 zu erkennen ist, welche einzelne Schaltgassen 22 aufweist. Während bei bekannten Schaltanordnungen die Endbereiche 23 der Schaltgassen 22 so angeordnet sind, dass diese einen Endanschlag für die Schaltwelle 1 bilden, sind die Schaltgasen 22 in Schaltrichtung so verlängert, dass die Anschlagsfunktion durch Zusammenwirkung von Hülse 18 und Blechlaschen 17 a, b erfüllt wird, jedoch nicht im Bereich der Kulissenführung 21 erfolgt.

### Bezugszeichenliste

- 1: Schaltwelle
- 2: Pfeil
- 3: Pfeil
- 4: Hülse
- 5: Rastiersegment
- 6: Schaltdom
- 7: Pfeil
- 8: Arretierbolzen
- 9: Rollkugel
- 10: Mittelabschnitt
- 11: Wählgasse
- 12 a, b: Schaltgasse
- 13: Knick
- 14 a, b: U-förmige Abschnitt
- 15 a, b: Schenkel
- 16 a, b: Grund
- 17 a, b: Blechlasche
- 18: Hülse
- 19 a - g: Endanschlagsbereich
- 20: Versteifungseinformungen
- 21: Kulissenführung
- 22: Schaltgasse
- 23: Endbereich

## Patentansprüche

1. Getriebeschaltvorrichtung, aufweisend:
ein Übertragungselement (1) zur Umsetzung von Schalt- und/oder Wählbewegungen, das in Bezug auf eine Längsachse in axialer Richtung (2) verschiebbar und/oder in Umlaufrichtung (3) schwenkbar in einem Gehäuse (6) angeordnet ist,
- ein Rastiersegment (5), das auf dem Übertragungselement (1) oder auf einem zwischen dem Übertragungselement (1) und dem Rastiersegment (5) angeordneten Adapterteil befestigt ist und eine Funktionskontur mit Schaltgassen und zumindest einer Wählgasse als Führungsgassen (11, 12a-c) aufweist,
- ein gehäusefest angeordnetes Arretierelement (8), das durch die Führungsgassen (11, 12a-c) in radialer Orientierung und/oder in radialer Richtung in Bezug auf die Längsachse geführt ist,
- einen Anschlagsbereich (19a-g) auf dem Rastiersegment (5) für einen gehäuseseitigen Anschlagkörper (18) gegen den der Anschlagkörper (18) stoßartig anschlagen kann, um bei der Schaltbewegung ein Überschalten zu vermeiden, wobei die Führungsgassen für das Arretierelement (8) beim Abfahren eine Höhenkontur bildin, wobei die Höhe zum einen zu einem gewünschten Wähl- bzw. Schaltwiderstand beim Betätigen führt und zum anderen in einer Schaltstellung zu einer Arretierung des Arretierungselements (8) in einem vertieften Bereich führt.
**dadurch gekennzeichnet, dass** das Arretierelement als ein in radialer Richtung und/oder Orientierung verschiebbar gelagerter Arretierbolzen (8) mit einem Bolzenhals und einen Rollkörper (9) ausgebildet ist, wobei der Rollkörper in dem Bolzenhals gelagert und der Bolzenhals als der Anschlagkörper ausgebildet ist,
oder dass der Anschlagkörper als eine gehäusefeste Hülse (18) ausgebildet ist, welche das Arretierelement, insbesondere ein als Arretierbolzen (8) ausgebildetes Arretierelement, umschließt.

2. Schaltvorrichtung nach einem der vorhergehenden Ansprüche, **gekennzeichnet durch** eine Schaltkulisse (21) und einen Kulissenfinger, wobei Schaltkulisse (21) oder Kulissenfinger gehäusefest und Kulissenfinger bzw. Schaltkulisse (21) drehfest auf dem Übertragungselement angeordnet sind und wobei die Schaltkulisse (21) und Kulissenfinger eine in Schaltwegrichtung endanschlagsfreie Zwangsführung bilden.

3. Schaltvorrichtung nach Anspruch 1 oder 2, **dadurch gekennzeichnet, dass** das Rastiersegment (5) als ein Blechformteil ausgebildet ist.

4. Schaltvorrichtung nach Anspruch 1 oder 2 oder 3, **dadurch gekennzeichnet, dass** mehrere Anschlagsbereiche (19a-g) oder eine Teilmenge davon auf einer auskragenden Blechlasche (17) angeordnet sind.

5. Schaltvorrichtung nach Anspruch 4, **dadurch gekennzeichnet, dass** zwischen den Anschlagsbereichen (19a-g) auf der Blechlasche (17) Versteifungsausformungen (20) angeordnet sind.

6. Schaltvorrichtung nach Anspruch 4 oder 5, **dadurch gekennzeichnet, dass** beidseitig zu einer Wählgasse (11) jeweils eine derartige Blechlasche (17) angeordnet ist.

7. Schaltvorrichtung nach einem der vorhergehenden Ansprüche, **dadurch gekennzeichnet, dass** sich die Schaltgassen (12a-c) senkrecht und beidseitig zu einer Wählgasse (11) in Umlaufrichtung und/oder -orientierung erstrecken.

8. Schaltvorrichtung nach einem der vorhergehenden Ansprüche, **dadurch gekennzeichnet, dass** der oder die Anschlagsbereiche (19a-g) in einer gedachten Verlängerung der Führungsgasse bzw. -gassen (11, 12a-c) angeordnet ist bzw. sind.

9. Schaltvorrichtung nach einem der Ansprüche vorhergehenden, **dadurch gekennzeichnet, dass** die Anschlagsbereiche (19a-g) so angeordnet sind, dass unterschiedliche Schwenkwinkel des Übertragungselements (1) um dessen Längsachse ermöglicht sind.

## Claims

1. Transmission shift device, having:
- a transfer element (1) for the implementation of shift and/or selection movements, which is arranged in a housing (6) displaceably in the axial direction (2) with respect to a longitudinal axis and/or pivotably in the direction of rotation (3),
- a latching segment (5) which is fastened on the transfer element (1) or on an adapter part arranged between the transfer element (1) and the latching segment (5) and which has a functional contour with shift gates and at least one selection gate as guide gates (11, 12a-c),
- a detention element (8) which is arranged fixedly with respect to the housing and which is guided by the guide gates (11, 12a-c) in a radial orientation and/or in a radial direction with respect to the longitudinal axis,
- an abutment region (19a-g) on the latching segment (5) for a housing-side abutment body (18), against which abutment region the abutment body (18) can butt abruptly in order to prevent overshifting during the shift movement, the guide gates forming a height contour for the detention element (8) when it moves down, the height leading, on the one hand, to a desired selection or shift resistance during actuation and leading, on the other hand, in a shift position, to detention of the detention element (8) in a recessed region, **characterized in that** the detention element is designed as a detention bolt (8) mounted displaceably in the radial direction and/or orientation and having a bolt neck and a rolling body (9), the rolling body being mounted in the bolt neck and the bolt neck being designed as the abutment body, or **in that** the abutment body is designed as a sleeve (18) which is fixed with respect to the housing and which surrounds the detention element, in particular a detention element designed as a detention bolt (8).

2. Shift device according to one of the preceding claims, **characterized by** a shift gate (21) and a gate finger, the shift gate (21) or gate finger being arranged fixedly with respect to the housing and the gate finger or shift gate (21) being arranged fixedly in terms of rotation on the transfer element, and the shift gate (21) and the gate finger forming a restricted guide which is free of a limit stop in the shift travel direction.

3. Shift device according to Claim 1 or 2, **characterized in that** the latching segment (5) is designed as a sheet metal moulding.

4. Shift device according to Claim 1 or 2 or 3, **characterized in that** a plurality of abutment regions (19a-g) or a subset of these are arranged on a projecting sheet metal tab (17).

5. Shift device according to Claim 4, **characterized in that** shaped-out stiffening portions (20) are arranged on the sheet metal tab (17) between the abutment regions (19a-g).

6. Shift device according to Claim 4 or 5, **characterized in that** a sheet metal tab (17) of this type is arranged on each of the two sides of a selection gate (11).

7. Shift device according to one of the preceding claims, **characterized in that** the shift gates (12a-c) extend perpendicularly with respect to and on both sides of a selection gate (11) in the direction of rotation and/or orientation.

8. Shift device according to one of the preceding claims, **characterized in that** the abutment region or abutment regions (19a-g) is or are arranged in an imaginary prolongation of the guide gate or guide gates (11, 12a-c).

9. Shift device according to one of the preceding claims, **characterized in that** the abutment regions (19a-g) are arranged such that different pivot angles of the transfer element (1) about its longitudinal axis are made possible.

## Revendications

1. Dispositif de changement de vitesse, comportant :
- un élément de transmission (1) permettant de convertir des mouvements de changement ou de sélection de vitesse, ledit élément étant disposé dans un carter (6) de façon à pouvoir être coulissé dans la direction axiale (2) par rapport à un axe longitudinal et/ou à pouvoir pivoter dans la direction de rotation (3) ;
- un segment de crantage (5) fixé sur l'élément de transmission (1) ou sur une partie d'adaptateur disposée entre l'élément de transmission (1) et le segment de crantage (5) et un contour fonctionnel équipé de couloirs de changement de vitesse et d'au moins un couloir de sélection de vitesse prenant la forme de couloirs de guidage (11, 12a-c) ;
- un élément d'arrêt (8) agencé de façon à être fixé au carter et guidé à travers les couloirs de guidage (11, 12a-c) dans l'orientation radiale et/ou dans la direction radiale par rapport à l'axe longitudinal ;
- une zone de butée (19a-g) pouvant buter par entrechocage contre le corps de butée (18) sur le segment de crantage (5) prévu pour un corps de butée (18) situé côté carter, pour éviter un passage à une vitesse supérieure en cas de mouvement de changement de vitesse ;
- les couloirs de guidage formant un contour surélevé pour l'élément d'arrêt (8) lors du démarrage, cette sur-hauteur conduisant d'une part à une résistance à la sélection et/ou au changement de vitesse souhaité lors de l'actionnement et d'autre part à une position de changement de vitesse conduisant à un arrêt de l'élément d'arrêt (8) dans une zone creusée ;
**caractérisé en ce que** :
l'élément d'arrêt prend la forme d'un boulon d'arrêt (8) disposé de façon à pouvoir être coulissé dans la direction et/ou dans l'orientation radiale et doté d'un col de boulon et d'un corps de roulement (9), le corps de roulement étant disposé dans le col de boulon et le col de boulon prenant la forme d'un corps de butée ;
ou que le corps de butée prend la forme d'une douille (18) fixée solidement au carter et entourant l'élément d'arrêt, notamment un élément d'arrêt prenant la forme d'un boulon d'arrêt (8).

2. Dispositif de changement de vitesse selon l'une quelconque des revendications précédentes, **caractérisé par** un coulisseau de changement de vitesse (21) et par un doigt de coulisseau, le coulisseau de changement de vitesse (21) ou le doigt de coulisseau étant fixés fermement au carter et le doigt de coulisseau et/ou le coulisseau de changement de vitesse (21) étant disposés solidairement en rotation sur l'élément de transmission et le coulisseau de changement de vitesse (21) et le doigt de coulisseau formant un guidage forcé sans butée dans la direction de sortie de changement de vitesse.

3. Dispositif de changement de vitesse selon la revendication 1 ou 2, **caractérisé en ce que** le segment de crantage (5) prend la forme d'une pièce moulée en tôle.

4. Dispositif de changement de vitesse selon la revendication 1 ou 2 ou 3, **caractérisé en ce que** plusieurs zones de butée (19a-g) ou une partie de celles-ci sont disposées sur une bride en tôle (17) coudée vers l'extérieur.

5. Dispositif de changement de vitesse selon la revendication 4, **caractérisé en ce que** des éléments de renfort (20) sont disposés sur la bride en tôle (17), entre les zones de butée (19a-g).

6. Dispositif de changement de vitesse selon la revendication 4 ou 5, **caractérisé en ce qu'**une telle bride en tôle (17) est respectivement disposée des deux côtés d'un couloir de sélection de vitesse (11).

7. Dispositif de changement de vitesse selon l'une quelconque des revendications précédentes, **caractérisé en ce que** les couloirs de changement de vitesse (12a-c) s'étendent perpendiculairement et des deux côtés d'un couloir de sélection de vitesse (11) dans la direction et/ou l'orientation de rotation.

8. Dispositif de changement de vitesse selon l'une quelconque des revendications précédentes, **caractérisé en ce que** la ou les zones de butée (19a-g) est disposée et/ou sont disposées dans un prolongement recouvert du couloir et/ou des couloirs de guidage (11, 12a-c).

9. Dispositif de changement de vitesse selon l' une quelconque des revendications précédentes, **caractérisé en ce que** les zones de butée (19a-g) sont disposées de façon à permettre différents angles de pivotement de l'élément de transmission (1) autour de son axe longitudinal.
